# EUROPEAN PATENT SPECIFICATION

(11) **EP 4 467 337 B1**
(45) Date of publication and mention of the grant of the patent: **21.10.2026**
(21) Application number: 24205411.2
(22) Date of filing: 15.08.2022
(51) Int. Cl.: G10K 11/168, G10K 11/172, B29C 73/00, B29C 73/04, B29C 73/10, B32B 3/12, B32B 5/02, B32B 5/26, B32B 7/12, B32B 15/04, B32B 15/09, B64C 1/06, B64C 1/40, B64D 11/00

(54) **SOUND ABSORBING STRUCTURES**
SCHALLABSORBIERENDE STRUKTUREN
STRUCTURES D'ABSORPTION ACOUSTIQUE

(30) Priority: 16.08.2021 US 202117445148
(43) Date of publication of application: 27.11.2024
(62) Document number(s) of the earlier application(s) in accordance with Art. 76 EPC: 22190343.8 / 4 138 073
(73) Proprietor: The Boeing Company, Arlington, VA 22202 (US)
(72) Inventor: Drexler, Jason W., Chicago, 60606-1596 (US); Kauffman IV, Joseph Ulrich, Chicago, 60606-1596 (US); Montgomery, Joshua M., Chicago, 60606-1596 (US); Wilde, John Christopher, Chicago, 60606-1596 (US); Nguyen, Phuong Minh, Chicago, 60606-1596 (US); Metting, Stephanie Iris, Chicago, 60606-1596 (US)
(74) Representative: Morrall, Jonathan Ian McLachlan

(56) References cited:
- US-A1- 2010 247 848
- US-A1- 2014 235 122
- US-A1- 2014 329 043
- US-B1- 6 267 838
- US-B1- 8 696 843
- ANONYMOUS: "Aeria - MaterialDistrict", 16 June 2010 (2010-06-16), pages 1 - 2, XP093008908, Retrieved from the Internet <URL:https://materialdistrict.com/material/aeria/> [retrieved on 20221216]
- ANONYMOUS: "Texaa Acoustic panel Stereo original", 1 March 2018 (2018-03-01), pages 1 - 23, XP093032252, Retrieved from the Internet <URL:https://www.esprit-pha.cz/wp-content/uploads/2018/06/Version-Web_CATAL_STEREO_EN.pdf> [retrieved on 20230316]

## Description

### Technical Field

The present disclosure relates to the field of sound absorbing structures for suppressing ambient noise (e.g., reflected noise), such as within a structure, for example, a transportation vehicle, e.g., an aircraft.

### Background

During operation of a vehicle, noise can be generated from multiple sources. For example, in an aircraft, noise can be generated from exterior turbulent flow, aircraft engine jet exhaust, and vibrations resulting therefrom. In addition, noise from within the passenger compartment, for example, climate control features, passenger conversation, movement and use of food and drink service items, and water closet activity, among others, can also add to interior sound levels, and possibly to passenger discomfort.

Solid surfaces within the interior of the vehicle can reflect sound waves, which can result in the need for personnel within the vehicle to wear ear protection and communicate via headsets and microphones. For crew and passenger comfort and safety within commercial vehicle, noise-attenuation techniques are typically incorporated to reduce the transfer of sound through the flight deck and passenger compartment. One common technique employs the use of sound absorbing panels attached to vertical surfaces of an interior of the vehicle to reduce reflected sound waves. However, reflection of sound waves can be particularly difficult to mitigate with flat panels where other interior surfaces are contoured, such as, for example, overhead storage bin, fuselage liners, and within galleys of an aircraft.

Some conventional sound absorbing panels (i.e., acoustic structures) include a back skin, an open-cell honeycomb core having a back surface attached to the back skin, an open weave reinforcement attached to a front surface of the honeycomb core, and a rigid perforated face sheet attached to the leno weave reinforcement. Some acoustic structure designs further include a mesh layer positioned between the honeycomb core and the perforated face sheet, where the mesh layer is acoustically transparent. The acoustic structures are attached to interior surfaces of the aircraft flight deck and passenger compartment and provide some level of noise attenuation within the vehicle. The perforated face sheet provides a durable surface that is resistant to damage from physical contact and is generally flame resistant.

US6267838, according to its abstract, describes a sandwich panel made of a composite material with acoustical attenuation for a wall and/or self-supporting covering, more particularly for doubling the bulkheads or cabin walls of aircraft, and including an alveolar structural core (14) especially a honeycomb core, and two skins (12, 16) disposed and rendered integral on both sides of the core, wherein the two skins (12, 16) include holes and wherein the holes of at least one of the two skins are micropores. A method for producing this panel is also disclosed.

US2010247848, according to its abstract, describes a sandwich element for a sound-absorbing inner cladding of transport means, such as aircraft fuselage cells, comprising a honeycomb-shaped core structure and cover layers applied to both sides of the core structure. At least one cover layer is constructed as permeable to air at least in sections and a covering is disposed at least in sections on at least one cover layer, wherein a sound absorption layer is disposed at least in sections in the area of at least one cover layer. A plurality of passages in the cover layers allow efficient transmission of the sound impinging on the sandwich element from outside as far as the sound absorption layer of the sandwich element.

US2014235122, according to its abstract, describes a composite comprising adhered components and method of refurbishing such composites. The composite includes a first component, a second component, and the first component being adhered to the second component using an adhesive stack. The adhesive stack comprises a first adhesive-impregnated scrim layer disposed between the first component and the second component and a bulk adhesive layer disposed between the first component and the second component.

### Summary

The following presents a simplified summary in order to provide a basic understanding of some aspects of one or more implementations of the present disclosure. This summary is not an extensive overview, nor is it intended to identify key or critical elements of the present disclosure, nor to delineate the scope of the disclosure. Rather, its primary purpose is merely to present one or more concepts in simplified form as a prelude to the detailed description presented below.

The present inventors have recognized that conventional panels can be expensive to manufacture and are generally limited to panel-like surfaces that are substantially flat, and without complex contours, limiting where such structures can be installed. As used herein, a "complex contour" shall be understood to mean that, when tracing a bounding shape of the acoustic structure, the curvature of the surface of the acoustic structure is multi-directional. For example, a ceiling panel design can exhibit curvature in two orthogonal directions, such as forward and aft, and left to right within the envelope of the pressurized fuselage. In addition, such conventional panels increase weight of the vehicle, thereby increasing energy consumption during travel. While the surface of the acoustic structure can be printed to incorporate a graphic design, it is most common for these structures to feature a simple aesthetic such as a solid color. An acoustic structure design having improved sound attenuation while reducing weight and conforming to desired contours and color within a vehicle are desirable.

According to examples of the present disclosure, an acoustic structure presenting a front surface and a back surface is provided. The acoustic structure includes a support layer comprising the back surface, a honeycomb core comprising a thickness defined between a back and a front, and a plurality of walls that define a plurality of honeycomb cells, wherein the plurality of honeycomb cells extend through the thickness of the honeycomb core opening out toward at least the front, and wherein the back of the honeycomb core is affixed to the support layer, a mesh layer affixed to the front of the honeycomb core, and a knit fabric layer affixed to the mesh layer and conforming to the front surface of the acoustic structure.

By providing an acoustic structure according to the recited structure, a lightweight sound-reducing structure can be obtained, with the structure conforming to any number of desired contours of an application. In addition, based on the use of readily available knitted fabrics as the top layer, restoration of the acoustic structure to a like new or nearly new state can be achieved without removal of the acoustic structure from an installed location.

According to further examples, a noise-reducing system comprising an acoustic structure forming a surface defining at least a portion of a passenger compartment of an aircraft, is provided. The acoustic structure includes a support layer, a honeycomb core comprising a thickness defined between a back and a front, and a plurality of walls that define a plurality of honeycomb cells, wherein the plurality of honeycomb cells extend through the thickness of the honeycomb core opening out toward at least the front, and wherein the back of the honeycomb core is affixed to the support layer, a mesh layer affixed to the front of the honeycomb core, and a knit fabric layer affixed to the mesh layer and conforming to the front surface of the acoustic structure.

By providing an acoustic structure according to the recited structure within an aircraft, fuel savings can be achieved based on reduced weight, while providing a desired level of sound reduction. In addition, because many contoured surfaces exist within an aircraft, the recited structure can be implemented in any number of applications within the aircraft, thereby leading to greater sound reduction, and in turn, greater passenger comfort.

According to the present invention, a method for repairing an installed structure is provided as defined in independent claim 1. Further advantageous aspects of the present invention are provided in the dependent claims.

Implementation of such a method can allow for rapid restoration of a contoured acoustic structure to a like new or nearly new condition, even in an installed location. This leads to cost savings both as a result of implementation of readily available knit fabrics, and because replacement time is greatly reduced.

It is intended that combinations of the above-described elements and those within the specification can be made, except where otherwise contradictory.

It is to be understood that both the foregoing general description and the following detailed description are illustrative and explanatory only and are not to be considered limiting. The scope of the present invention is defined in the appended claims.

### Brief Description of the Drawings

The accompanying drawings, which are incorporated in, and constitute a part of this specification, illustrate implementations of the present disclosure and, together with the description, serve to explain the principles of the disclosure. In the figures:
FIG. 1 is an exploded cross section of an acoustic structure according to an implementation of the present disclosure.
FIG. 2 is a cross section of the structure of FIG. 1 after assembly.
FIG. 3 is a plan view of a honeycomb core according to an implementation of the present disclosure.
FIG. 4 is a cross section of an implementation for forming an acoustic structure according to the present disclosure.
FIG. 5 is a graph comparing acoustic absorption characteristics for a conventional acoustic structure with acoustic structures in accordance with the present disclosure.
FIG. 6A is an illustrative acoustic structure exhibiting complex contours over its surface;
FIG. 6B is an exploded view of a cross section of a complex contour of the acoustic structure of FIG. 6A;
FIG. 6C shows the acoustic structure of FIG. 6A including a graphic design applied to the knit fabric layer;
FIG. 7 shows a vehicle (an aircraft) including a plurality of acoustic structures in accordance with an implementation of the present disclosure;
FIG. 8 is a cross section of another acoustic structure according to the present disclosure; and
FIG. 9 is a flowchart illustrating a method for repairing an acoustic structure installed in a vehicle, according to examples of the present disclosure.

It should be noted that some details of the figures have been simplified and are drawn to facilitate understanding of the present disclosure rather than to maintain strict structural accuracy, detail, and scale.

### Detailed Description

Reference will now be made in detail to example implementations of the present disclosure, examples of which are illustrated in the accompanying drawings. Generally, and/or where convenient, the same reference numbers will be used throughout the drawings to refer to the same or like parts.

Some conventional acoustic structures include a back skin, an open-cell honeycomb core having a back surface attached to the back skin, a leno weave reinforcement mesh layer, and a rigid perforated face sheet provided by a perforated laminate attached to a front surface of the honeycomb core. While these conventional acoustic structures are effective in reducing reflection of sound waves, they suffer some limitations. For example, the perforations through the face sheet, which allow sound waves to pass through the face sheet and enter the honeycomb core, are difficult and expensive to manufacture. The perforations in the structure must be done precisely to provide an aesthetically pleasing surface, as the face sheet is visible to passengers and crew. Additionally, the acoustic structures are relatively heavy, resulting at least partially from a relatively large mass of the perforated face sheet, which is manufactured from fiber-reinforced plastics and can include an aluminum foil. Still further, these panels are generally limited to flat panel structures due to their construction, and are often limited to use as, for example, bulkheads within an aircraft. Therefore, such panels are also generally not aesthetically useful.

Examples of the present disclosure provide acoustic structures that can be implemented as a noise reducing system, and in some implementations, be lighter in weight, more easily manufactured at a lower cost, have improved sound dampening characteristics over some conventional acoustic structures, and/or can be contoured to perform as various in-cabin structures (e.g., overhead storage bin, galley cabinetry, fuselage lining such as ceilings and walls, closet interior surfaces, etc.). An acoustic structure according to the present disclosure can have a decreased weight compared to conventional acoustic structures, resulting at least partially from use of a knit fabric layer instead of a fiber-reinforced plastic perforated face sheet. The weight of an acoustic structure according to the present disclosure can be reduced by as much as 0.27 kilograms per square meter (kg/m²) compared to conventional acoustic structure designs. In addition, restoration of acoustic structures of the present disclosure to a like new or nearly new state can be rapidly performed, even while the acoustic structure remains in an installed location.

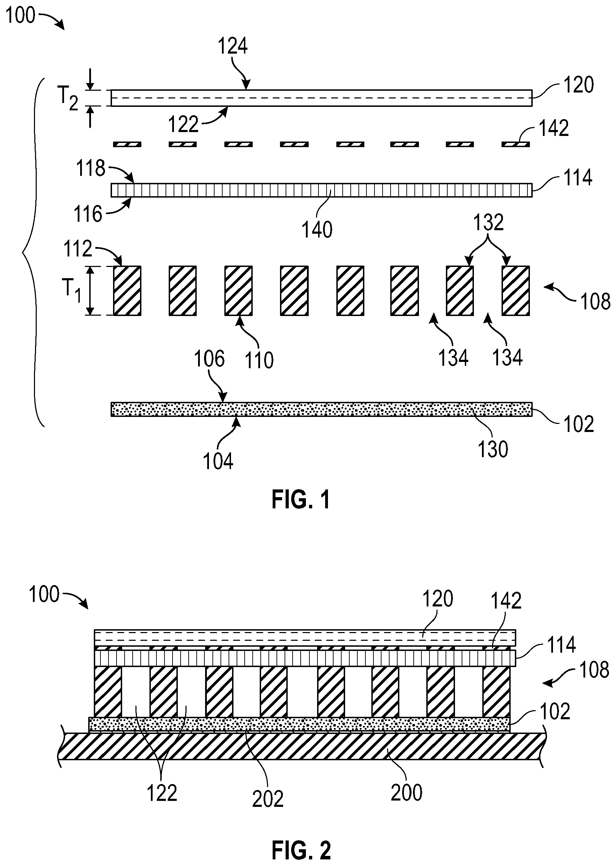

In-process structures which can be formed during an implementation of the present disclosure are depicted in FIGS. 1 and 2. FIG. 1 depicts an exploded cross section of a small portion of an acoustic structure 100 in accordance with an implementation of the present disclosure, and FIG. 2 depicts an assembled cross section of the FIG. 1 implementation. For purposes of simplicity, contours of the acoustic structure are not shown in FIGs. 1 and 2. This implementation includes a support layer 102 such as a moisture-resistant backing layer having a back surface 104 and a front surface 106, and a honeycomb core 108 (e.g., fiberglass, carbon fiber, a poly-paraphenylene terephthalamide fabric such as Kevlar^{®}, a meta-aramid fabric including meta-aramid fibers such as Nomex^{®}, etc.) in a thermoset or thermoplastic matrix (e.g., phenolic, epoxy, polyester, etc.). The honeycomb core 108 can include a back surface 110 and a front surface 112. This implementation can further include a mesh layer 114 as described in more detail below, having a back surface 116 and a front surface 118. The mesh layer 114 improves structural stiffness and/or strength of the acoustic structure while allowing sound to enter the honeycomb core. Implementations of the present disclosure further include a knit fabric layer 120 having a back surface 122 and a front surface 124. In this implementation for purposes of description, the "back surface" is the surface of a structure that is closest to an attachment surface to which the acoustic structure 100 will be attached, and/or the surface which, in an installed configuration, would not typically be visible to individuals in a personnel space, for example, a passenger compartment or flight deck, within a vehicle (e.g., an aircraft). The "front surface" is the surface of the structure opposite to the back surface, closest to and generally visible from within a personnel space. It will be appreciated that the figures depict generalized illustrative implementations, and an actual acoustic structure in accordance with the present disclosure can include other structures that, for simplicity, are not depicted, while various depicted structures can be removed or modified.

The support layer 102 can comprise, for example, fiber (e.g., fiberglass, carbon fiber, a poly-paraphenylene terephthalamide fabric such as Kevlar^{®}, a meta-aramid fabric such as Nomex^{®}, etc.) The support layer 102 can further be or include a material that is pre-impregnated with an adhesive 130, commonly referred to as a prepreg. The adhesive 130 (e.g., thermoset polymer matrix material such as epoxy, or a thermoplastic resin) incorporated into the support layer 102 adheres the front surface 106 of the support layer 102 to the back surface 110 of the honeycomb core 108 as described below. The support layer 102 can thus be or include a thermoset composite or thermoplastic composite (e.g., phenolic, epoxy, polyester, etc.). The support layer 102 can also be or include any material such as metal, paper, wood, plastic, etc., that is suitably rigid to allow secure attachment to a structure such as a surface of a transportation vehicle. The support layer 102 can have a thickness that is sufficient to provide structural integrity for supporting loads and stresses without damage in the intended application of the acoustic structure 100, for example, from about 0.003 cm (0.001 inch) to about 0.076 cm (0.030 inch). During use, the acoustic structure 100 can be attached to a surface 200 (FIG. 2) of a transportation vehicle using an adhesive layer 202 (e.g., an epoxy), and/or one or more fasteners (not shown), for example, mechanical fasteners such as bolts, screws, hangers, etc.

The support layer 102 can present single- or multi-directional contours depending on, for example, an intended installation and/or operation with a vehicle. For example, where the acoustic structure 100 is intended to be implemented as an overhead storage bin closure within the passenger cabin of an aircraft, the support layer 102 can be contoured according to an intended shape for the overhead storage bin, such that subsequent components of the acoustic structure 100, as described below, can substantially conform to the desired shape. In another example, where the acoustic structure 100 is intended to be implemented as a galley cabinet component (e.g., a cabinet door), the support layer 102 can be suitably contoured to match the intended shape of such a component.

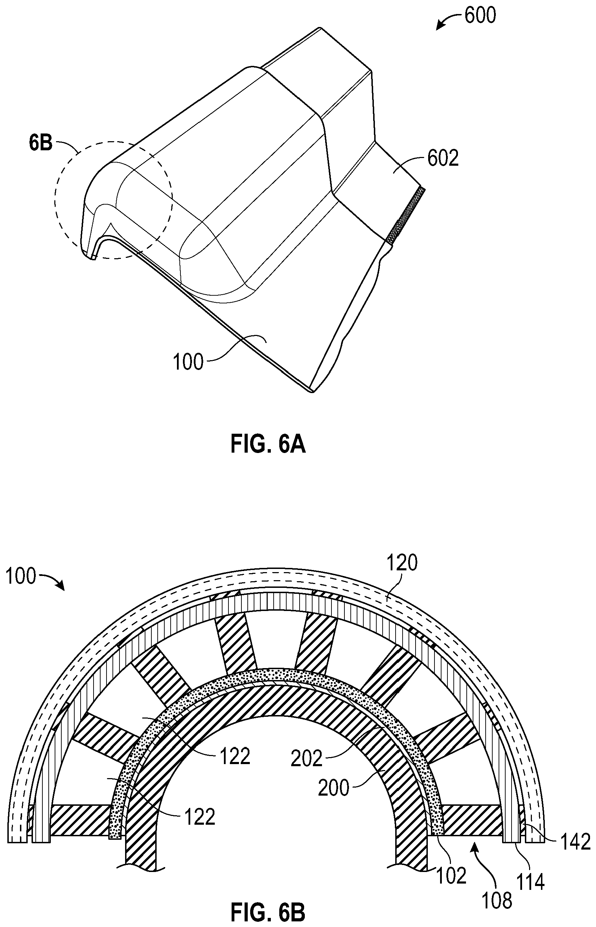

According to some examples, the contours of the acoustic structure 100 can be complex. FIGs. 6A-C show an illustrative acoustic structure including complex contours over its surface, and are described in greater detail below.

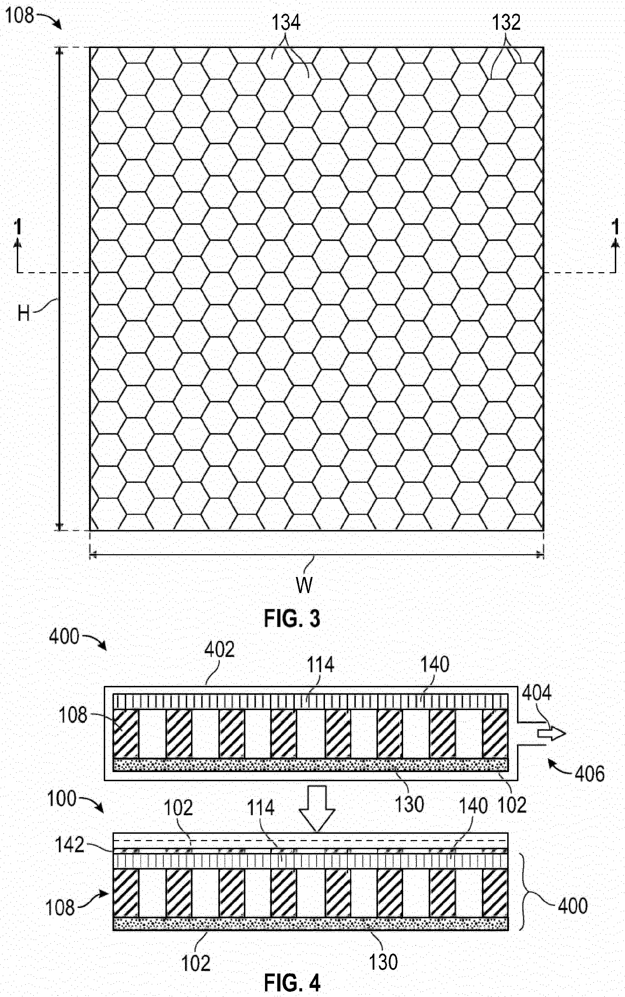

The honeycomb core 108 can comprise fiber reinforced composite (e.g., fiberglass, carbon fiber, a poly-paraphenylene terephthalamide fabric such as Kevlar^{®}, a meta-aramid fabric including meta-aramid fiber such as Nomex^{®}, etc.) in, for example, a thermoset or thermoplastic polymer matrix (e.g., phenolic, epoxy, polyester, etc.). The honeycomb core 108 can also be or include any sufficiently rigid material such as metal, paper, wood, plastic, etc. for the purpose of providing structural integrity. The honeycomb core 108 has a thickness "T₁" that extends from the back surface 110 to the front surface 112, wherein the thickness T₁ of the honeycomb core 108 can be from about 0.64 cm (0.25 inches) to about 5.1 cm (2 inches), although other thinner or thicker dimensions are contemplated depending on the intended use and design of the acoustic structure. The honeycomb core 108 includes a plurality of walls 132 that define a plurality of honeycomb cells 134, wherein the plurality of honeycomb cells 134 extend through the thickness T₁ of the honeycomb core 108 from the back surface 110 to the front surface 112. The honeycomb core 108 is further depicted in plan view in FIG. 3, where the honeycomb core 108 can have a width "W" of from about 12 cm (5 inches) to about 300 cm (120 inches) and a length or height "H" of from about 12 cm (5 inches) to about 300 cm (120 inches), although other widths and/or height dimensions are contemplated depending on the intended use and design of the acoustic structure.

The mesh layer 114 can comprise a woven fabric, for example, a fabric with a leno weave, and can be configured to improve structural stiffness and/or strength of the acoustic structure while allowing sound waves to enter the honeycomb core to which the mesh layer 114 is affixed.

The mesh layer 114 can be fabricated from any suitable material, and can comprise, for example, a fiberglass fabric, carbon fiber fabric and/or a polyester fabric, and can comprise synthetic fibers such as nylon, rayon, acrylic, etc., and natural fibers such as cotton, wool, etc. Suitable mesh layers include Kevlar^{®}, Nomex^{®}, and HexForce^{™} 8800 available from Hexcel^{®}.

According to some examples the mesh layer 114 can be a prepreg, where the material of the mesh layer 114 is pre-impregnated with an adhesive 142 (e.g., thermoset polymer matrix material such as epoxy, or a thermoplastic resin). The adhesive 142 incorporated into the mesh layer 114 can be configured to adhere the back surface 116 of the mesh layer 114 to the front surface 112 of the honeycomb core 108 as described below. The mesh layer 114 can thus be or include a thermoset composite or thermoplastic composite (e.g., phenolic, epoxy, polyester, etc.)

According to some examples, the adhesive 142 can be configured so as to avoid interfering with passage of sound waves from the exterior of the acoustic structure 100 into the honeycomb core 108. For example, the adhesive 142 can be a high viscosity adhesive (e.g., having a viscosity greater than 10 Pas (10000 centiPoise)) to prevent bleeding and/or other transmission of the adhesive into orifices formed in the mesh and/or the honeycomb core 108.

The knit fabric layer 120 can comprise a flexible flame-resistant material that is durable and resists damage from physical contact with other structures that the knit fabric layer 120 is likely to come into contact with. Additionally, the knit fabric layer 120 should be manufactured from a material that is washable or cleanable so that the knit fabric layer 120, which is visually exposed during use, remains visually attractive.

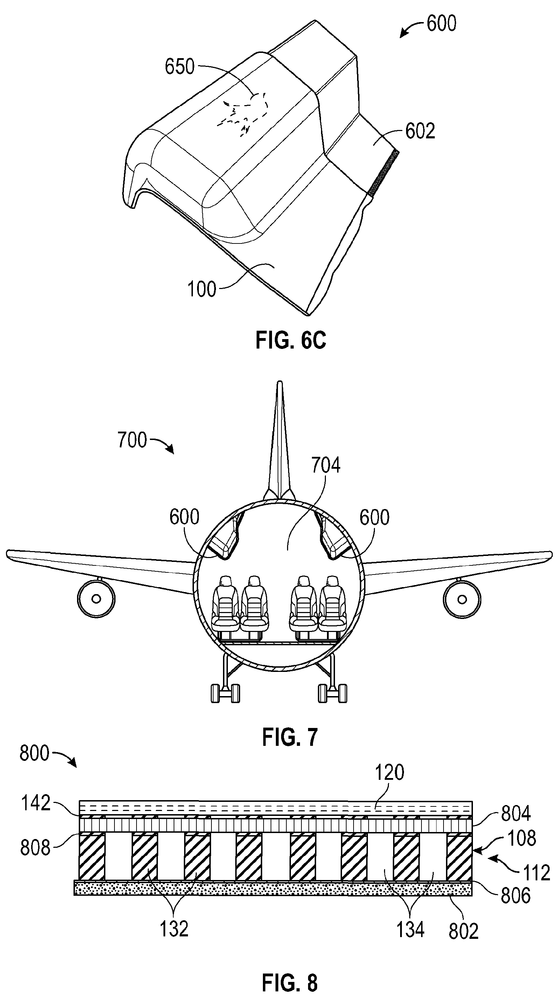

The material of the knit fabric layer 120 can further be printable such that a desired design (e.g., a graphic), for example, an airline logo, can be applied (e.g., via inkjet printing, silk screening, dye sublimation, etc.) and retained on or within the knit fabric layer 120. An illustrative graphic design 650 imprinted on an acoustic structure according to examples of the present disclosure is highlighted at FIG. 6C.

The knit fabric layer 120 can comprise, for example, a cotton, a wool, a polyester, an aramid polymer, an aromatic polyamide, meta-aramid fibers, a modacrylic fabric, and/or para-aramid fibers. Other suitable flame retardant knitted fabrics are available from Trevira^{®}, Tisca^{®}, Neotex^{®}, Lantal^{®}, and/or Replin.

The knit fabric layer 120 can have a thickness "T₂" of from about 0.013 cm (0.005 inch) to about 0.3 cm (0.1 inch), and a basis weight of about 250 grams per square meter (g/m²) to about 450 g/m², for example 350 g/m², although larger and smaller thicknesses and basis weights are contemplated depending on the intended use and design. By implementing fabrics according to these specifications, desirable sound attenuation can be achieved without introducing undesired weight. Further, the width and length or height of the knit fabric layer 120 can approximate the width W and length or height H of the honeycomb core 108.

Pore density of material comprised by the knit fabric layer 120 can vary according to, for example, a knitting technique (e.g., weft-knit, weft-knit, etc.), a yarn density, tension used during the knitting operation, a thickness of the knitted fabric, etc. For example, an illustrative weft-knit fabric can be prepared using a single jersey-style knitting operation using a yarn of a desired density and at a desired carriage tension, resulting in a particular pore density. Another illustrative warp-knit fabric can be prepared using a tricot-style knitting operation and a yarn of a desired density at a desired carriage tension, resulting in a pore density different from that of the jersey-style knit fabric. One of skill will understand upon review of the present disclosure that different desirable pore densities can be obtained using various knitting techniques and yarn density.

For example, a pore density of the knit fabric layer can be configured such that pores of the knit fabric layer align substantially with the honeycomb cell openings. Such a configuration can allow sound waves to be initially dissipated by the fabric. Further, openings in the mesh layer can enable fluid communication between pores of the knit fabric layer and the openings of the honeycomb cells thereby causing remaining sound to directed to within the honeycomb cells for additional attenuation.

A knit fabric for a particular acoustic structure can be selected based on, for example, contours of the acoustic structure, intended placement of the acoustic structure, desired sound attenuation (e.g., based on intensity and/or frequency), etc. For example, a knit fabric having a first thickness, knitting technique, and a first pore density can be selected for use on an acoustic structure acting as an overhead storage bin in an aircraft, and a second knit fabric having a second thickness, knitting technique, and pore density can be selected for use as galley cabinetry in the aircraft. By varying the fabric according to location, different attenuation characteristics can be achieved leading to great sound reduction and improved passenger comfort.

During manufacture of the acoustic structure 100, the support layer 102, the honeycomb core 108, and the mesh layer 114 can be stacked as depicted in the upper portion of FIG. 4 to form a panel subassembly 400, which is then processed to cure the panel subassembly 400. The processing can include, for example, an application of pressure to the panel subassembly 400 within a vacuum bag 402 . Air 404 from within the vacuum bag 402 and around the panel subassembly 400 can be evacuated from the vacuum bag 402 through a vacuum bag exhaust port 406 using conventional processing techniques. Optionally, heat can be applied to the panel subassembly 400 within the vacuum bag 402 for a suitable duration of time, or the panel subassembly 400 can be cured at ambient (e.g., room) temperature. The application of pressure and (optional) heat cures the panel subassembly 400, for example, by curing the adhesive 130 that impregnates the support layer 102, thereby bonding the front surface 106 of the support layer 102 to the back surface 110 of the honeycomb core 108 using the adhesive 130 within the support layer 102. Further, the application of pressure and (optional) heat cures the panel subassembly 400, for example, by curing the adhesive 140 that impregnates the mesh layer 114, thereby bonding the back surface 116 of the mesh layer 114 to the front surface 112 of the honeycomb core 108.

After curing the panel subassembly (e.g., the adhesives 130, 140) the cured panel subassembly 400 is removed from the vacuum bag 402 as depicted in the lower portion of FIG. 4. Subsequently, the back surface 122 of the knit fabric layer 120 is attached to the front surface 118 of the mesh layer 114 using an adhesive layer 142 that is or can include one or more of a thermoplastic, a thermoset, an acrylic, a polyamide, a polyester, a urethane, and/or a rubberized adhesive, combinations of two or more of these, or another suitable adhesive. There are different methods of application of the adhesive layer 142, for example, by spray, hot melt, or roll coating. As depicted, the adhesive layer 142 that attaches the knit fabric layer 120 to the mesh layer 114 is applied as a non-continuous, patterned layer intended to overlie (as in contact) only the plurality of walls 132 of the honeycomb core 108, and not to overlie (as in enter) the plurality of honeycomb cells 134. Adhesive inside the honeycomb cells 134 results in undesirable scenarios such as the addition of weight to the structure, and the potential for manufacturing quality challenges due to the presence of improperly located, unusable adhesive. Forming the adhesive layer 142 as a blanket layer would result in reflection of sound waves from the adhesive layer 142 before the sound waves enter the honeycomb cells 134, thereby decreasing sound wave absorption by the acoustic structure 100. Forming the adhesive layer 142 as a patterned layer ensures that the sound waves pass through the cross-sectional openings or voids within the adhesive layer 142 and enter the honeycomb cells 134 so that reflection of the sound waves from the acoustic structure 100 is attenuated.

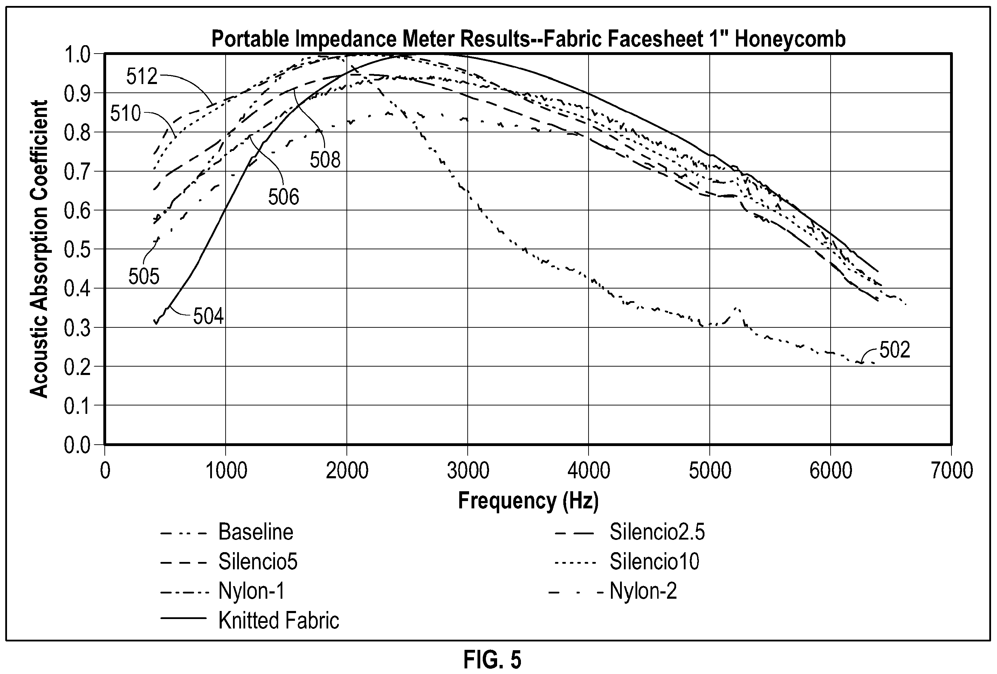

FIG. 5 is a graph 500 that plots acoustic absorption coefficients for a plurality of different acoustic structures over a range of frequencies, where the frequencies range from about 500 hertz (Hz) to about 6500 Hz. The results were measured using a Brüel & Kjær^{®} brand portable impedance meter, type 9737. Reference number 502 plots the acoustic absorption coefficients results for a conventional acoustic structure using a perforated rigid face sheet as is known in the art. Reference number 504 plots result points for acoustic structures having a knit fabric top layer, according to examples of the present disclosure. Reference numbers 505-512 plot points for acoustic structures having various fabric face sheets overlying a honeycomb core. Reference numbers 505 and 506 plot the results for two plain weave nylon fabric samples, where the two fabric samples vary with respect to areal weights. Reference numbers 508, 510, and 512 plot the results for the acoustic structure surfaced with a Silencio^{®} 2.5, Silencio^{®} 10, and Silencio^{®} 5 materials respectively (commercially available from Pongs^{®} Textil GmbH). Silencio^{®} fabrics are polyester fiber acoustic textiles, where the polyester fibers have a particular chemical structure, and the reference numbers "2.5," "5," and "10" refer to a dimension of decorative diamonds, in millimeters, that are formed as three-dimensional features of each particular fabric. Each of the samples shown included a honeycomb core having a thickness of 2.5 cm (1.0 inch).

As shown in FIG. 5, the acoustic structures formed in accordance with the present disclosure include a knit fabric top layer, and have better sound absorbing properties over a wider range of frequencies than the conventional acoustic structure including the perforated rigid face sheet (identified by reference number 502). Particularly at frequencies in the range of about 2500 Hz to 6000 Hz, the knit fabric acoustic structure performed better at absorbing and/or attenuating reflected sound waves than the conventional acoustic structure 502 using the perforated face sheet. Indeed, in this frequency range, the acoustic structures of the present disclosure outperformed all of the other tested structures for sound attenuation.

Further, it was found that an acoustic structure with knit fabric layer and a honeycomb core having a thickness of approximately 2.5 cm (1.0 inch) was better at attenuating reflected sound than a similar acoustic structure with a honeycomb core having a thickness of 1.3 cm (0.5 inch). In general, an acoustic structure in accordance with the present disclosure can have a honeycomb core with a thickness of from about 0.64 cm (0.25 inch) to about 5.1 cm (2.0 inches), or from about 1.3 cm (0.5 inch) to 3.8 cm (1.5 inches), for example about 2.5 cm (1.0 inch), or another suitable thickness depending on the use and design. An acoustic structure having a honeycomb core that is excessively thin will not provide suitable sound wave reflection attenuation, while an acoustic structure having a honeycomb core that is too thick will require excessive space within vehicle compartments (e.g., passenger compartment of an aircraft).

In some implementations, the acoustic structure will have an absorption coefficient ranging from about 0.6 to about 1.0 (e.g., from 0.6 to 1.0) as measured by ASTM E1050-98, over a broad frequency range from 400Hz to 5,000Hz. This is compared to the acoustic fabric tested alone which, depending on its air permeability and other factors, will have an absorption coefficient of between 0.2 and 0.3. A solid-faced honeycomb core panel will have an absorption coefficient near zero, corresponding to 100% of sound waves being reflected.

Methods for forming an acoustic structure and/or for using an acoustic structure in accordance with the present disclosure will now be described. Formation of an acoustic structure depicted in FIGS. 1-5 and 6A-C, is described herein, but this is not limited to any particular structure or use unless expressly stated herein. The method can be performed before, during, or after other processes, for example, as an assembly sub-process. It will be appreciated that while the process is described as a series of acts or events, the present disclosure are not limited by the ordering of such acts or events. Some acts can occur in different orders and/or concurrently with other acts or events apart from those described herein. Further, a method in accordance with the present disclosure can include other acts or events that have not been depicted for simplicity, while one or more depicted acts or events can be removed or modified as sub-processes of the method.

A panel subassembly 400 can be formed including a support layer 102, a honeycomb core 108, and a mesh layer 114. In this implementation, the support layer 102 is pre-impregnated with a first adhesive 130 and the mesh layer 114 is pre-impregnated with a second adhesive 140, which can be the same or different than the first adhesive 130. (As used herein, unless otherwise specified, the terms "first," "second," and "third," with respect to adhesives impregnated within another structure and/or adhesive layers that mechanically attach two structures together are used merely to uniquely identify distinct adhesive layers or adhesives and do not imply assembly order with respect to any manufacturing process.) With the honeycomb core 108 in physical contact with the support layer 102 and the mesh layer 114, heat and/or pressure are applied to the panel subassembly 400, for example within a fixture 402 such as a vacuum bag 402, to cure the first adhesive 130 and the second adhesive 140, thereby attaching the front surface 106 of the support layer 102 to the back surface 110 of the honeycomb core 108, and the front surface 112 of the honeycomb core 108 to the back surface 116 of the mesh layer 114. The panel subassembly 400 can be removed from the fixture 402 subsequent to curing the adhesives 130, 140.

Next, a knit fabric layer 120 is attached as a face sheet to the panel subassembly 400 and, more specifically, the back surface 122 of the knit fabric layer 120 is attached to the front surface 118 of the mesh layer 114 subsequent to the curing of the first adhesive 130 and the second adhesive 140, where the first adhesive 130 can be the same composition or a different composition than the second adhesive 140. The attachment can include the use of an adhesive layer 142 between the mesh layer 114 and the knit fabric layer 120. The adhesive layer 142 can be applied to either the front surface 118 of the mesh layer 114, the back surface 122 of the knit fabric layer 120, or both, then the knit fabric layer 120 is physically contacted with the mesh layer 114 and the adhesive layer 142 is cured using any suitable technique. While the adhesive layer 142 is being cured, a compressive pressure can be applied to the knit fabric layer 120 to maintain alignment with the honeycomb core 108, and to maintain physical contact of the adhesive layer 142 with the honeycomb core 108 and the knit fabric layer 120.

The adhesive layer 142 is applied in a pattern (e.g., a non-continuous pattern) such that, after attaching the knit fabric layer 120 to the mesh layer 114, the adhesive layer 142 overlies the plurality of walls 132 of the honeycomb core 108, and does not overlie the plurality of honeycomb cells 134, for the reasons discussed above.

Compressive pressure applied to the knit fabric layer 120 during manufacture of the acoustic structure 100 can be low to avoid crushing the knit fabric layer 120, but sufficient to allow for desirable adhesion. In an implementation, a compressive pressure of from about 7000 Pa (1.0 pound per square inch (psi)) to about 100000 Pa (15.0 psi) can be applied to the knit fabric layer 120, for example, using a suitable fixture 402, although other compressive pressures are contemplated as long as the acoustic properties of the knit fabric layer 120 are not negatively affected, compromised, or degraded. Compressive pressures below 7000 Pa (1.0 psi) can result in insufficient bonding of the knit fabric layer 120 to the underlying structure, while compressive pressures greater than 100000 Pa (15.0 psi) can result in damage or deformation of the knit fabric layer 120. As elevated temperatures and atmospheric pressures also tend to damage the knit fabric layer 120 during the application of a compressive force, the application of the adhesive layer 142 to the knit fabric layer 120 is best performed at or near room temperature (e.g., from 18°C to 24°C (65°F to 75°F)) and at or near standard atmospheric pressure.

FIG. 6A is an illustrative acoustic structure exhibiting complex contours over its surface, while FIG. 6B is an exploded view of a segment of a complex contour shown on the acoustic structure of FIG. 6A. Additionally, FIG. 6C shows the acoustic structure of FIG. 6A with a graphic design 650 applied to the knit fabric layer 120. According to some examples, the acoustic structure 100 can form the surface 602 of a structural component of a transportation vehicle 700 (FIG. 7). Alternatively, or in addition, the acoustic structure can be attached to a surface 602, such as for example, to a surface of a structural component of a transportation vehicle 700 (FIG. 7) to form a composite structure 600. Taking an example of an overhead storage bin of an aircraft that is to be provided with sound attenuation capabilities, an acoustic structure 100 as described herein can form or be affixed to a surface 602 of the overhead storage bin before or after installation within the aircraft to form the composite structure 600.

According to further examples, for example, where load bearing is not under consideration, acoustic structures of the present disclosure can be implemented without attachment to additional surfaces such as composite structure 600.

FIG. 7 depicts a vehicle 700 into which one or more acoustic structures 100 in accordance with the present disclosure are installed. While FIG. 7 depicts an vehicle 700 (e.g., an aircraft), it will be appreciated that the one or more acoustic structures 100 can be installed in other transportation vehicles such as other types of aerospace vehicles, watercraft, a railway vehicle or other overland vehicles, etc., or applied to other non-vehicle uses where mitigation of reflected sound, such as ambient noise, is desired. In this implementation, the acoustic structures 100 are configured as composite structures 600 forming overhead storage bins, hung from an upper portion of the fuselage of the aircraft. According to some examples, acoustic structures 100 of the present disclosure can be affixed to, for example, vertical sides of a bulkhead that divides areas within a passenger compartment 704 of the vehicle 700, galley cabinetry, etc.

An acoustic structure 100 in accordance with the present disclosure can have a decreased reflection of sound waves compared to conventional acoustic structures, for example, as demonstrated by the graph 500 of FIG. 5. Further, the acoustic structures of the present disclosure can be lighter in weight and can be more easily restored to a like new or nearly new condition. In addition, such structures can be provided with a desired graphic design, which can be easily changed at a later time.

It will be appreciated that various other acoustic structure implementations and methods of formation are contemplated. For example, FIG. 8 depicts an acoustic structure 800 including a backing layer 802, a honeycomb core 108, a mesh layer 804, and a knit fabric layer 120. In this implementation, the acoustic structure 800 is not formed using prepreg structures, but instead includes a plurality of discrete adhesive layers. The backing layer 802 and the mesh layer 804 can be analogous to the support layer 102 and the mesh layer 114 respectively of the FIG. 1 implementation. However, in contrast to support layer 102, backing layer 802 is not impregnated with adhesive 130. Further, in contrast to mesh layer 114, mesh layer 804 is not impregnated with adhesive 140. The adhesive layer 142 depicted in FIG. 800 can be a material as described above with reference to FIG. 4, and is thus numbered the same.

In this implementation, the backing layer 802 is physically attached to the honeycomb core 108 with a first adhesive layer 806 and the honeycomb core 108 is physically attached to the mesh layer 804 with a second adhesive layer 808. The mesh layer 804 can be physically attached to the knit fabric layer 120 as described above with reference to FIG. 4 using the adhesive layer 142 which, in this implementation, thus provides a third adhesive layer 142. Each of the adhesive layers 806, 808, 142 can comprise one or more of a thermoplastic, a thermoset, an acrylic, a polyamide, a polyester, a urethane, and/or a rubberized adhesive, combinations of two or more of these, or another suitable adhesive, where each of the adhesive layers 806, 808, 142 can be the same or different, each from each other.

As depicted in FIG. 8, the first adhesive layer 806 can be formed as a blanket layer, while the second adhesive layer 808 and the third adhesive layer 142 are formed as, for example, non-continuous patterned layers, such that they overlie only the plurality of walls 132 of the honeycomb core 108, and do not overlie the plurality of honeycomb cells 134, for the reasons discussed above. Forming the second adhesive layer 808 and the third adhesive layer 142 as a blanket layer would result in reflection of sound waves from these adhesives before the sound waves enter the honeycomb cells 134, thereby decreasing sound wave absorption by the acoustic structure 800. Forming these layers as patterned layers ensures that the sound waves pass through the cross-sectional openings or voids within the adhesive layers and enter the honeycomb cells 134 so that reflection of the sound waves from the acoustic structure 800 is attenuated.

It will be appreciated that in some methods of formation of the acoustic structure 800, each of the layers are assembled as a single structure as depicted in FIG. 8, then all of the adhesive layers 806, 808, 142 can be simultaneously cured. In other implementations, formation of the acoustic structure 800 can be performed by forming two or more subassemblies, which are then assembled to form the completed acoustic structure 800. For example, in one implementation, the honeycomb core 108 can be attached to the backing layer 802 using the first adhesive layer 806, which is cured using a suitable curing process. Next, the mesh layer 804 can be attached to the honeycomb core 108 using the second adhesive 808, which is cured using a suitable curing process. Subsequently, the knit fabric layer 120 can be attached to the mesh layer 804 using the third adhesive layer 142, which is then cured using a suitable curing process. Other implementations for assembling the acoustic structure 800 are contemplated.

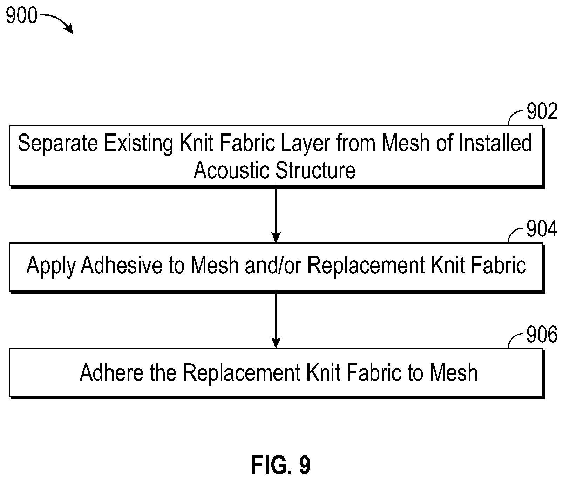

FIG. 9 is a flowchart illustrating a method for repairing an acoustic structure installed in a vehicle, according to examples of the present disclosure. Once an acoustic structure 100 has been installed in a vehicle, surfaces of the acoustic structure 100 can become dirty and/or damaged due to use or misuse, and it can be desirable to repair the acoustic structure to restore the appearance of the installed acoustic structure 100 to new or like new. Alternatively, or in addition, it can be desirable to change an existing knit fabric layer 120 having a first graphic design with a replacement knit fabric layer 120 having a second graphic design, for example, where a vehicle is sold to a new owner.

According to examples of the present disclosure, the knit fabric layer 120 can be separated from the mesh layer of an acoustic structure 100 even when the acoustic structure is installed in a vehicle (step 902). For example, adhesive holding knit fabric layer 120 can be warmed to soften the adhesive and allow for easier separation of the knit fabric layer from the adhesive. The knit fabric layer 120 can then be pulled and/or scraped away from the surface of the mesh layer 104, to remove the existing knit fabric layer 120.

Once the existing knit fabric layer 120 has been removed, a new adhesive layer can be provided to the surface of the mesh layer 140 and/or a replacement knit fabric layer (step 904). For example, the knit fabric layer 120 can include an adhesive layer ready for installation on mesh layer 140. Alternatively, or in addition, an adhesive can, for example, be present on mesh layer 140 (e.g., a pre-preg mesh layer 140), sprayed or otherwise applied onto mesh layer 140 in preparation for installation of the replacement knit fabric layer 120.

According to some examples not encompassed by the wording of the claims, new adhesive cannot be applied, and step 904 can be considered optional.

The replacement knit fabric layer 120 can then be applied to the mesh layer 140 for final installation (step 906). For example, a replacement knit fabric layer 120 can be stretched to fit the contoured surfaces of the acoustic structure 100, and pressure applied to adhere the replacement knit fabric layer 120 to the mesh layer 140.

Thus, an acoustic structure in accordance with the present disclosure can be lighter in weight than conventional acoustic structures, thereby reducing operating costs of transportation vehicles. Additionally, in contrast to conventional acoustic structures that use a rigid perforated face sheet that is difficult to manufacture, an acoustic structure in accordance with the present disclosure uses a flexible knit fabric layer 120 as a face sheet that provides a visually appealing surface, accepts graphic designs (e.g., via printing), and offers easier repair and replacement without additional processing. An acoustic structure according to the present disclosure can provide superior sound attenuation and greater flexibility in placement, based on the ability to contour the acoustic structure, as compared to a conventional, flat-panel acoustic structure.

It is contemplated that acoustic structures according to the present teaching can be installed into a vehicle 700 (FIG. 7) during an initial manufacture of such vehicles. Furthermore, vehicles manufactured with conventional acoustic structures can be retrofitted with acoustic structures according to the present disclosure, for example, if such retrofitting is cost effective (e.g., results in reduced fuel costs due to decreased weight) or otherwise desirable (e.g., crew and/or passenger fatigue over a period of time is decreased due to reduced noise within the vehicle). Retrofitting can include, for example, removing conventional acoustic structures (e.g., acoustic structures having a perforated metal face sheet) and replacing them with acoustic structures according to the present disclosure (e.g., acoustic structures having a knitted fabric layer).

By installing an acoustic structure that includes a knit fabric layer 120 in accordance with the present disclosure into a transportation vehicle, either during an initial manufacturing process or a retrofitting process, noise within the transportation vehicle can be reduced, i.e. the sound can be attenuated. The installation process can include manufacturing an acoustic structure in accordance with the present disclosure or procuring a pre-manufactured acoustic structure in accordance with the present disclosure from a supplier. The acoustic structure can be attached to a surface of the transportation vehicle. In another implementation, an in-process or fully completed transportation vehicle including one or more acoustic structures in accordance with the present teaching can be purchased from a supplier. In any of the foregoing scenarios, during use of the transportation vehicle, noise is reduced or attenuated during use of the transportation vehicle, where the noise reduction or attenuation results, at least in part, from the acoustic structure that includes the knit fabric layer 120.

Notwithstanding that the numerical ranges and parameters setting forth the broad scope of the present disclosure are approximations, the numerical values set forth in the specific examples are reported as precisely as possible. Any numerical value, however, inherently contains certain errors necessarily resulting from the standard deviation found in their respective testing measurements. Moreover, all ranges disclosed herein are to be understood to encompass any and all sub-ranges subsumed therein. For example, a range of "less than 10" can include any and all sub-ranges between (and including) the minimum value of zero and the maximum value of 10, that is, any and all sub-ranges having a minimum value of equal to or greater than zero and a maximum value of equal to or less than 10, e.g., 1 to 5. In certain cases, the numerical values as stated for the parameter can take on negative values. In this case, the example value of range stated as "less than 10" can assume negative values, e.g. - 1, -2, -3, -10, -20, -30, etc.

Specific values for described elements should be understood to be within accepted manufacturing or industry tolerances known to one of skill in the art, and any use of the terms "substantially" and/or "approximately" and/or "generally" should be understood to mean falling within such accepted tolerances.

While examples of the present disclosure have been illustrated with respect to one or more implementations, alterations and/or modifications can be made to the illustrated examples without departing from the scope of the present invention as defined in the appended claims. For example, it will be appreciated that while the process is described as a series of acts or events, the present disclosure is not limited by the ordering of such acts or events. Some acts can occur in different orders and/or concurrently with other acts or events apart from those described herein. Also, not all process stages can be required to implement a methodology in accordance with one or more aspects or implementations of the present disclosure. It will be appreciated that structural components and/or processing stages can be added or existing structural components and/or processing stages can be removed or modified. Further, one or more of the acts depicted herein can be carried out in one or more separate acts and/or phases. Furthermore, to the extent that the terms "including," "includes," "having," "has," "with," or variants thereof are used in either the detailed description and the claims, such terms are intended to be inclusive in a manner similar to the term "comprising." The term "at least one of" is used to mean one or more of the listed items can be selected. As used herein, the term "one or more of" with respect to a listing of items such as, for example, A and B, means A alone, B alone, or A and B. Further, in the discussion and claims herein, the term "on" used with respect to two materials, one "on" the other, means at least some contact between the materials, while "over" means the materials are in proximity, but possibly with one or more additional intervening materials such that contact is possible but not required. Neither "on" nor "over" implies any directionality as used herein. The term "conformal" describes a coating material in which angles of the underlying material are preserved by the conformal material. The term "about" indicates that the value listed can be somewhat altered, as long as the alteration does not result in nonconformance of the process or structure to the illustrated implementation. Other implementations of the present disclosure will be apparent to those skilled in the art from consideration of the specification and practice of the disclosure herein. It is intended that the specification and examples be considered as illustrative only, with a true scope of the present disclosure being indicated by the following claims.

Terms of relative position as used in this application are defined based on a plane parallel to the conventional plane or working surface of a workpiece, regardless of the orientation of the workpiece. The term "horizontal" or "lateral" as used in this application is defined as a plane parallel to the conventional plane or working surface of a workpiece, regardless of the orientation of the workpiece. The term "vertical" refers to a direction perpendicular to the horizontal. Terms such as "on," "side" (as in "sidewall"), "higher," "lower," "over," "top," and "under" are defined with respect to the conventional plane or working surface being on the top surface of the workpiece, regardless of the orientation of the workpiece.

Where any standards of national, international, or other standards body are referenced (e.g., ASTM, ISO, etc.), such references are intended to refer to the standard as defined by the national or international standards body as of the priority date of the present specification. Any subsequent substantive changes to such standards are not intended to modify the scope and/or definitions of the present disclosure and/or claims.

## Claims

1. A method for repairing an installed acoustic structure (100, 800), wherein the installed acoustic structure (100, 800) presenting a front surface and a back surface comprises:
a support layer (102) comprising the back surface;
a honeycomb core (108) comprising a thickness defined between a back and a front, and a plurality of walls (132) that define a plurality of honeycomb cells (134), wherein the plurality of honeycomb cells extend through the thickness of the honeycomb core opening out toward at least the front, and wherein the back of the honeycomb core is affixed to the support layer;
a mesh layer (114) affixed to the front of the honeycomb core; and
an existing knit fabric layer (120) affixed to the mesh layer and conforming to the front surface of the installed acoustic structure,
the method comprising:
separating the existing knit fabric layer (120) from the mesh layer (114, 804) of the installed acoustic structure (100, 800);
applying an adhesive (142) to the mesh layer (114, 804) and/or a replacement knit fabric layer (120); and
adhering the replacement knit fabric layer (120) to the mesh layer (114, 804);
wherein the adhesive (142) is applied as a non-continuous, patterned layer (142) that overlies only the plurality of walls (132) of the honeycomb core (108), and does not overlie the plurality of honeycomb cells (134).

2. The method of claim 1, wherein prior to the adhering, a graphic design (650) is applied to the replacement knit fabric layer (120), the graphic design (650) differing from a graphical design present on the existing knit fabric layer (120).

3. The method of claim 1 or claim 2, wherein the adhesive (130, 140, 142) is sprayed on to the mesh layer (104, 114, 140, 804) and/or the replacement knit fabric layer (120).

4. The method of claim 1 or claim 2, wherein the adhesive (130, 140, 142) is applied to the mesh layer (104, 114, 140, 804) and/or the replacement knit fabric layer (120) by hot melt.

5. The method of claim 1 or claim 2, wherein the adhesive (130, 140, 142) is applied to the mesh layer (104, 114, 140, 804) and/or the replacement knit fabric layer (120) by roll coating.

6. The method of any preceding claim, further comprising stretching the replacement knit fabric layer (120) over one or more contours formed by the acoustic structure (100, 800).

7. The method of any preceding claim, wherein the acoustic structure (100, 800) is installed in a vehicle.

8. The method of any preceding claim, further comprising heating the existing knit fabric layer (120) prior to separating the existing knit fabric layer (120) from the mesh layer (104, 114, 140, 804).

9. The method of any preceding claim, wherein separating the existing knit fabric layer (120) from the mesh layer (104, 114, 140, 804) includes pulling and/or scraping the existing knit fabric layer (120) from a surface of the mesh layer (104, 114, 140, 804).

10. The method of any preceding claim, wherein the mesh layer (104, 114, 140, 804) is pre-impregnated with the adhesive (130, 140, 142).

11. The method of any preceding claim, wherein adhering the replacement knit fabric layer (120) to the mesh layer (104, 114, 140, 804) includes applying pressure to the replacement knit fabric layer (120) and the mesh layer (104, 114, 140, 804).

12. The method of any preceding claim, wherein the replacement knit fabric layer (120) comprises one or more of a cotton, a wool, a polyester, an aramid polymer, an aromatic polyamide, meta-aramid fibers, a rayon, a viscose, a flame retardant polyester, a modacrylic fabric, and/or para-aramid fibers.

13. The method of any preceding claim, wherein the mesh layer (104, 114, 140, 804) comprises one or more of a fiberglass fabric, a carbon fiber fabric, a polyester fabric, a nylon, a rayon, an acrylic, a cotton and/or a wool.

14. The method of any preceding claim, wherein the adhesive (130, 140, 142) comprises one or more of a thermoplastic, a thermoset, an acrylic, a polyamide, a polyester, a urethane, and/or a rubberized adhesive.

15. The method of any preceding claim, wherein a pore density of the knit fabric layer is configured such that pores of the knit fabric layer align substantially with honeycomb cell openings of the honeycomb cells.

## Patentansprüche

1. Verfahren zum Reparieren einer installierten akustischen Struktur (100, 800), wobei die installierte akustische Struktur (100, 800), die eine vordere Oberfläche und eine hintere Oberfläche aufweist, umfasst:
eine Trägerschicht (102), die die hintere Oberfläche umfasst;
einen Wabenkern (108) umfassend eine Dicke, die zwischen einer Rückseite und einer Vorderseite definierte ist, und eine Vielzahl von Wänden (132), die eine Vielzahl von Wabenzellen (134) definieren, wobei die Vielzahl von Wabenzellen durch die Dicke des Wabenkerns verläuft und sich zu wenigstens der Vorderseite öffnet, und wobei die Rückseite des Wabenkerns an der Trägerschicht befestigt ist;
eine Netzschicht (114), die an der Vorderseite des Wabenkerns befestigt ist; und
eine bestehende Strickgewebeschicht (120), die an der Netzschicht befestigt ist und an die vordere Oberfläche der installierten akustischen Struktur angepasst ist,
wobei das Verfahren umfasst:
Trennen der bestehenden Strickgewebeschicht (120) von der Netzschicht (114, 804) der installierten akustischen Struktur (100, 800);
Aufbringen eines Klebstoffs (142) auf die Netzschicht (114, 804) und/oder eine Ersatz-Strickgewebeschicht (120); und
Anhaften der Ersatz-Strickgewebeschicht (120) an die Netzschicht (114, 804);
wobei der Klebstoff (142) als eine nichtkontinuierliche, strukturierte Schicht (142) aufgebracht wird, die nur über der Vielzahl von Wänden (132) des Wabenkerns (108) liegt und nicht über den Vielzahl von Wabenzellen (134) liegt.

2. Verfahren nach Anspruch 1, wobei vor dem Anhaften ein Grafikdesign (650) auf die Ersatz-Strickgewebeschicht (120) aufgebracht wird, wobei sich das Grafikdesign (650) von einem Grafikdesign unterscheidet, das auf der bestehenden Strickgewebeschicht (120) vorhanden ist.

3. Verfahren nach Anspruch 1 oder Anspruch 2, wobei der Klebstoff (130, 140, 142) auf die Netzschicht (104, 114, 140, 804) und/oder die Ersatz-Strickgewebeschicht (120) aufgesprüht wird.

4. Verfahren nach Anspruch 1 oder Anspruch 2, wobei der Klebstoff (130, 140, 142) durch Heißschmelzen auf die Netzschicht (104, 114, 140, 804) und/oder die Ersatz-Strickgewebeschicht (120) aufgebracht wird.

5. Verfahren nach Anspruch 1 oder Anspruch 2, wobei der Klebstoff (130, 140, 142) durch Walzenbeschichtung auf die Netzschicht (104, 114, 140, 804) und/oder die Ersatz-Strickgewebeschicht (120) aufgebracht wird.

6. Verfahren nach einem der vorstehenden Ansprüche, ferner umfassend Strecken der Ersatz-Strickgewebeschicht (120) über eine oder mehrere Konturen, die von der akustischen Struktur (100, 800) gebildet werden.

7. Verfahren nach einem der vorstehenden Ansprüche, wobei die akustische Struktur (100, 800) in einem Fahrzeug installiert ist.

8. Verfahren nach einem der vorstehenden Ansprüche, ferner umfassend Erhitzen der bestehenden Strickgewebeschicht (120) vor Trennen der bestehenden Strickgewebeschicht (120) von der Netzschicht (104, 114, 140, 804).

9. Verfahren nach einem der vorstehenden Ansprüche, wobei Trennen der bestehenden Strickgewebeschicht (120) von der Netzschicht (104, 114, 140, 804) Ziehen und/oder Schaben der bestehenden Strickgewebeschicht (120) von einer Oberfläche der Netzschicht (104, 114, 140, 804) umfasst.

10. Verfahren nach einem der vorstehenden Ansprüche, wobei die Netzschicht (104, 114, 140, 804) mit dem Klebstoff (130, 140, 142) vorimprägniert wird.

11. Verfahren nach einem der vorstehenden Ansprüche, wobei Anhaften der Ersatz-Strickgewebeschicht (120) an die Netzschicht (104, 114, 140, 804) Anwenden von Druck auf die Ersatz-Strickgewebeschicht (120) und die Netzschicht (104, 114, 140, 804) umfasst.

12. Verfahren nach einem der vorstehenden Ansprüche, wobei die Ersatz-Strickgewebeschicht (120) eines oder mehrere von einer Baumwolle, einer Wolle, einem Polyester, einem Aramidpolymer, einem aromatischen Polyamid, meta-Aramidfasern, einem Rayon, einer Viskose, einem flammhemmenden Polyester, einem Modacryl-Gewebe und/oder para-Aramidfasern umfasst.

13. Verfahren nach einem der vorstehenden Ansprüche, wobei die Netzschicht (104, 114, 140, 804) eines oder mehrere von einem Glasfasergewebe, einem Kohlefasergewebe, einem Polyestergewebe, einem Nylon, einem Rayon, einem Acryl, einer Baumwolle und/oder einer Wolle umfasst.

14. Verfahren nach einem der vorstehenden Ansprüche, wobei der Klebstoff (130, 140, 142) einen oder mehrere von einem Thermoplast, einem Duroplast, einem Acryl, einem Polyamid, einem Polyester, einem Urethan und/oder einem gummierten Klebstoff umfasst.

15. Verfahren nach einem der vorstehenden Ansprüche, wobei eine Porendichte der Strickgewebeschicht so ausgelegt ist, dass Poren der Strickgewebeschicht im Wesentlichen mit Wabenzellenöffnungen der Wabenzellen zusammenfallen.

## Revendications

1. Procédé destiné à réparer une structure acoustique en place (100, 800), la structure acoustique en place (100, 800), qui présente une surface avant et une surface arrière, comprenant :
une couche de support (102) comprenant la surface arrière ;
une âme en nid d'abeilles (108) comprenant une épaisseur définie entre un arrière et un avant, et une pluralité de parois (132) qui définissent une pluralité de cellules de nid d'abeilles (134), la pluralité de cellules de nid d'abeilles s'étendant à travers l'épaisseur de l'âme en nid d'abeilles en s'ouvrant au moins sur l'avant, et l'arrière de l'âme en nid d'abeilles étant fixé à la couche de support ;
une couche de treillis (114) fixée à l'avant de l'âme en nid d'abeilles ; et
une couche de tricot existante (120) fixée à la couche de treillis et épousant la forme de la surface avant de la structure acoustique en place,
le procédé comprenant :
la séparation de la couche de tricot existante (120) de la couche de treillis (114, 804) de la structure acoustique en place (100, 800) ;
l'application d'un adhésif (142) à la couche de treillis (114, 804) et/ou à une couche de tricot de remplacement (120) ; et
le collage de la couche de tricot de remplacement (120) à la couche de treillis (114, 804) ;
dans lequel l'adhésif (142) est appliqué sous la forme d'une couche à motif non continue (142) qui recouvre uniquement la pluralité de parois (132) de l'âme en nid d'abeilles (108), et ne recouvre pas la pluralité de cellules de nid d'abeilles (134).

2. Procédé de la revendication 1 dans lequel, avant le collage, un dessin graphique (650) est appliqué à la couche de tricot de remplacement (120), le dessin graphique (650) étant différent d'un dessin graphique présent sur la couche de tricot existante (120).

3. Procédé de la revendication 1 ou la revendication 2, dans lequel l'adhésif (130, 140, 142) est pulvérisé sur la couche de treillis (104, 114, 140, 804) et/ou sur la couche de tricot de remplacement (120).

4. Procédé de la revendication 1 ou la revendication 2, dans lequel l'adhésif (130, 140, 142) est appliqué à la couche de treillis (104, 114, 140, 804) et/ou à la couche de tricot de remplacement (120) par fusion à chaud.

5. Procédé de la revendication 1 ou la revendication 2, dans lequel l'adhésif (130, 140, 142) est appliqué à la couche de treillis (104, 114, 140, 804) et/ou à la couche de tricot de remplacement (120) par enduction au rouleau.

6. Procédé d'une quelconque revendication précédente, comprenant en outre l'étirement de la couche de tricot de remplacement (120) sur un ou plusieurs contours formés par la structure acoustique (100, 800).

7. Procédé d'une quelconque revendication précédente, dans lequel la structure acoustique (100, 800) est installée dans un véhicule.

8. Procédé d'une quelconque revendication précédente, comprenant en outre le chauffage de la couche de tricot existante (120) avant la séparation de la couche de tricot existante (120) de la couche de treillis (104, 114, 140, 804).

9. Procédé d'une quelconque revendication précédente, dans lequel la séparation de la couche de tricot existante (120) de la couche de treillis (104, 114, 140, 804) comprend l'arrachement et/ou le raclage de la couche de tricot existante (120) d'une surface de la couche de treillis (104, 114, 140, 804).

10. Procédé d'une quelconque revendication précédente, dans lequel la couche de treillis (104, 114, 140, 804) est préimprégnée avec l'adhésif (130, 140, 142).

11. Procédé d'une quelconque revendication précédente, dans lequel le collage de la couche de tricot de remplacement (120) à la couche de treillis (104, 114, 140, 804) comprend l'application de pression à la couche de tricot de remplacement (120) et à la couche de treillis (104, 114, 140, 804).

12. Procédé d'une quelconque revendication précédente, dans lequel la couche de tricot de remplacement (120) comprend un ou plusieurs éléments parmi un coton, une laine, un polyester, un polymère d'aramide, un polyamide aromatique, des fibres de méta-aramide, une rayonne, une viscose, un polyester ignifugé, un tissu modacrylique, et/ou des fibres de para-aramide.

13. Procédé d'une quelconque revendication précédente, dans lequel la couche de treillis (104, 114, 140, 804) comprend un ou plusieurs éléments parmi un tissu de fibres de verre, un tissu de fibres de carbone, un tissu de polyester, un nylon, une rayonne, un acrylique, un coton et/ou une laine.

14. Procédé d'une quelconque revendication précédente, dans lequel l'adhésif (130, 140, 142) comprend un ou plusieurs éléments parmi un thermoplastique, un plastique thermodurcissable, un acrylique, un polyamide, un polyester, un uréthane, et/ou un adhésif caoutchouté.

15. Procédé d'une quelconque revendication précédente, dans lequel une densité de pores de la couche de tricot est conçue de telle sorte que les pores de la couche de tricot s'alignent sensiblement avec des ouvertures de cellule de nid d'abeilles des cellules de nid d'abeilles.
